(19) Europäisches Patentamt
European Patent Office
Office européen des brevets

(11) **EP 2 526 070 B1**

(12) **FASCICULE DE BREVET EUROPEEN**

(45) Date de publication et mention de la délivrance du brevet:
**20.11.2019 Bulletin 2019/47**

(21) Numéro de dépôt: **10801610.6**

(22) Date de dépôt: **30.11.2010**

(51) Int Cl.:
*C03C 4/02* *(2006.01)*     *C03C 10/00* *(2006.01)*
*F21V 3/04* *(2018.01)*

(86) Numéro de dépôt international:
**PCT/FR2010/052568**

(87) Numéro de publication internationale:
**WO 2011/089327 (28.07.2011 Gazette 2011/30)**

(54) **ENSEMBLE D'AFFICHAGE COMPRENANT UNE PLAQUE EN VITROCERAMIQUE**

ANZEIGEEINHEIT MIT EINER PLATTE AUS GLASKERAMIK

DISPLAY UNIT INCLUDING A PLATE MADE OF GLASS-CERAMIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2010 FR 1050387**

(43) Date de publication de la demande:
**28.11.2012 Bulletin 2012/48**

(73) Titulaire: **Eurokera S.N.C.**
**02400 Chateau-Thierry (FR)**

(72) Inventeurs:
• **MULET, Jean-Philippe**
**F-93100 Montreuil (FR)**
• **CHARPENTIER, Bertrand**
**F-02400 Chateau-Thierry (FR)**
• **VILATO, Pablo**
**F-75014 Paris (FR)**
• **BOURGEOIS, Michael**
**F-75003 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
EP-A2- 1 465 460     JP-A- 2004 251 615
JP-B- 4 120 897      US-A1- 2002 023 463
US-A1- 2004 121 895  US-B2- 6 846 760

**Description**

L'invention concerne le domaine des vitrocéramiques.

Elle se rapporte plus précisément à un ensemble d'affichage comprenant un dispositif lumineux et une plaque en vitrocéramique du type aluminosilicate de lithium.

Les vitrocéramiques sont destinées notamment à être utilisées comme articles de cuisine, en particulier en tant que plaques de cuisson recouvrant des éléments chauffants tels que des foyers halogènes ou radiants, ou en tant qu'ustensiles de cuisson.

Si les vitrocéramiques du type aluminosilicate de lithium se révèlent être bien adaptées à ces utilisations, c'est grâce à leur aspect esthétique que l'on peut faire varier dans une large mesure, à leurs propriétés mécaniques, notamment à la résistance aux chocs importante du fait de leur faible coefficient d'expansion thermique dans la gamme des températures d'utilisation, et à leurs propriétés chimiques de résistance aux acides comme aux bases.

De manière classique, la production de vitrocéramique s'effectue en plusieurs étapes : a) fusion des matières premières vitrifiables contenant au moins un agent de nucléation ; b) formage et refroidissement du verre - appelé « verre-mère » - à une température plus basse que son domaine de transformation ; c) traitement thermique de céramisation du verre.

Ce traitement thermique, appelé « céramisation », permet, dans un de ses modes, de faire croître au sein du verre des cristaux de structure $\beta$-quartz, qui ont la particularité de posséder un coefficient de dilatation thermique négatif.

La présence, dans la vitrocéramique finale, de tels cristaux et d'une phase vitreuse résiduelle, permet d'obtenir un coefficient de dilatation thermique globalement nul ou très faible (la valeur absolue du coefficient de dilatation est typiquement inférieure ou égale à $15.10^{-7}/°C$, voire $5.10^{-7}/°C$). La taille des cristaux de structure $\beta$-quartz est généralement très faible, typiquement entre 30 et 70 nanomètres, de manière à ne pas diffuser la lumière visible.

Les vitrocéramiques possèdent en outre des propriétés optiques spécifiques qui dépendent de leur usage. Ainsi, dans le cas d'une plaque de cuisson, il est important que la vitrocéramique présente une faible aptitude à transmettre la lumière visible afin que l'utilisateur ne puisse pas, ou difficilement, distinguer les éléments chauffants sous-jacents quand ils ne fonctionnent pas. Mais dans le même temps, la plaque de cuisson doit permettre de visualiser les éléments lorsqu'ils chauffent, sans toutefois éblouir l'utilisateur, de manière à réduire le risque de brûlures au contact de la plaque chaude. La vitrocéramique doit encore présenter de bonnes propriétés de transmission énergétique, en particulier du rayonnement infrarouge produit par les éléments chauffants pour permettre que les aliments soient portés à la température désirée en un laps de temps le plus faible possible.

Des exemples de vitrocéramiques sont divulgués par exemple dans les documents EP 1 465 460 A2 et US 6,846,760 B2.

Les plaques de cuisson actuelles sont généralement colorées à l'aide d'oxyde de vanadium. L'oxyde de vanadium est ajouté aux matières premières du verre-mère avant la fusion, et il confère après céramisation une teinte orange-brune très soutenue, liée à une réduction du vanadium.

Ces vitrocéramiques colorées uniquement à l'oxyde de vanadium transmettent les longueurs d'ondes situées dans le rouge (au-delà de 600 nm), de sorte que les éléments chauffants sont visibles lorsqu'ils sont portés à haute température. Les affichages réalisés à l'aide de diodes électroluminescentes (ou LEDs) émettant dans le rouge sont également visibles au travers de la plaque de cuisson et donc particulièrement adaptés à ce type de vitrocéramiques.

Pour des raisons esthétiques il est récemment apparu un besoin de pouvoir également visualiser des affichages de couleurs différentes, ce qui est notamment rendu difficile à cause des très faibles transmissions dans le visible en dehors du rouge pour les plaques de vitrocéramiques actuellement disponible dans le commerce.

L'invention telle que définie par l'objet de la revendication 1 propose de pallier aux inconvénients précités avec un ensemble d'affichage comprenant, d'une part, une plaque en vitrocéramique du type aluminosilicate de lithium et dont la transmission optique pour une épaisseur de 4 mm est comprise entre 0,2% et 4% pour au moins une longueur d'onde comprise entre 400 et 500 nm et, d'autre part, un dispositif lumineux, remarquable en ce que le dispositif lumineux comprend au moins une source lumineuse polychromatique présentant au moins une première émission d'intensité non nulle à ladite longueur d'onde comprise entre 400 et 500 nm et au moins une deuxième émission à une longueur d'onde de plus de 500 nm, et tel que le positionnement de ladite source est adapté pour permettre un affichage au travers de ladite plaque de vitrocéramique.

L'ensemble d'affichage selon l'invention comprend une plaque, de préférence une plaque de cuisson, destinée à être intégrée dans une table de cuisson, cette dernière comprenant la plaque de cuisson et les éléments chauffants, par exemple des foyers radiants ou halogènes ou des éléments d'induction. L'affichage se fait au travers de la plaque à l'aide d'un dispositif lumineux polychromatique qui émet dans une première longueur d'onde de 400 à 500 nm, et au moins dans une deuxième longue d'onde au-delà de 500 nm. Les inventeurs ont découvert de manière surprenante que la combinaison entre ces différentes longueurs d'ondes émises par le dispositif lumineux et leurs absorptions respectives au travers de la plaque de vitrocéramique, permet d'obtenir un affichage de toutes les nuances de couleur perceptible par l'œil humain. Un tel ensemble d'affichage intégré dans une table de cuisson donne, par conséquent, accès à une infinité de nuances en terme de couleur et d'intensité lumineuse. Une telle invention permet de produire des animations variées sur la table de cuisson en associant, par exemple, des espaces ou des fonctions, à des colorations particulières.

Le terme « source lumineuse monochromatique » au sens de la présente invention définit une source lumineuse qui présente un seul pic d'émission dans la gamme des longueurs d'onde visibles et tel que la largeur du pic varie de 1 à 100 nm, préférentiellement de 5 à 50 nm, voire 10 à 30 nm.

Le terme « source lumineuse polychromatique » au sens de la présente invention définit une source lumineuse qui présente au moins deux pics d'émission dans la gamme des longueurs d'onde visibles. Il peut s'agir d'une LED, et/ou d'un afficheur à LED(s), avec un spectre d'émission présentant un pic d'émission principale et un pic d'émission de fluorescence, plus large que le pic principal, et de plus faible intensité.

La transmission optique, de la plaque de vitrocéramique de l'ensemble d'affichage décrit précédemment, pour une épaisseur de 4 mm est de préférence comprise entre 0,4% et 1,5% pour au moins une longueur d'onde comprise entre 400 et 500 nm.

Avantageusement, la transmission optique pour une épaisseur de 4 mm est de préférence comprise entre 0,2% et 4%, notamment entre 0,4% et 1,5% pour toute longueur d'onde comprise entre 400 et 500 nm.

De plus fortes transmissions entraîneraient la visualisation des éléments chauffants même hors période de chauffe, ce qui est à exclure. Pour de plus faibles transmissions en revanche, la visibilité des affichages bleus ou verts serait trop faible.

La transmission lumineuse au sens de la norme ISO 9050 :2003 et en utilisant l'illuminant D65 est de préférence inférieure ou égale à 3%, voire à 2% et même à 1% pour une plaque de 4 mm d'épaisseur. De la sorte, les éléments chauffants ne sont pas visibles lorsqu'ils sont éteints.

On entend par transmission lumineuse la transmission totale, tenant compte à la fois de la transmission directe et de l'éventuelle transmission diffuse. On utilise donc par exemple un spectrophotomètre muni d'une sphère intégrante. La transmission mesurée à une épaisseur donnée est ensuite convertie à l'épaisseur de référence de 4 mm selon les méthodes connues de l'homme du métier, incluses notamment dans la norme ISO 9050 :2003.

Par vitrocéramique du type aluminosilicate de lithium de l'ensemble d'affichage selon l'invention, on entend de préférence une vitrocéramique qui comprend, les constituants suivants dans les limites définies ci-après exprimées en pourcentages pondéraux :

| | |
|---|---|
| $SiO_2$ | 64 - 70 % |
| $Al_2O_3$ | 18 - 25 % |
| $Li_2O$ | 2,5 - 3,8 % |
| $K_2O$ | 0 - <1,0 % |
| $Na_2O$ | 0 - <1,0 % |
| ZnO | 1,2 - 2,8 % |
| MgO | 0,30 - 1,5 % |
| CaO | 0 - 1% |
| BaO | 0 - 3 % |
| SrO | 0 - 1,4 % |
| $TiO_2$ | 1,8 - 3,2 % |
| $ZrO_2$ | 1,0 - 2,5 % |

Cette vitrocéramique peut comprendre jusqu'à 1 % en poids de constituants non essentiels qui n'affectent pas la fusion du verre-mère ou la dévitrification ultérieure conduisant à la vitrocéramique.

La teneur en oxyde de baryum est de préférence comprise entre 1 et 3%, notamment entre 2 et 3% afin de diminuer la viscosité du verre. Pour la même raison, la teneur en silice est de préférence inférieure ou égale à 68%, notamment 67% voire même 66%. Les inventeurs ont également pu mettre en évidence un très fort effet de la teneur en chaux (CaO) sur la diminution de la viscosité, même pour de très faibles teneurs ajoutées. Pour cette raison, la teneur en CaO est d'au moins 0,2%, notamment 0,3% et même 0,4%.

Les meilleurs résultats sont obtenus pour des teneurs en alumine ($Al_2O_3$) inférieures ou égales à 23%, notamment 20,5%.

Afin d'atteindre les propriétés optiques souhaitées, des colorants sont ajoutés à la composition. Ainsi, la composition chimique de la plaque de l'ensemble d'affichage selon l'invention comprend de préférence de l'oxyde de vanadium en une teneur pondérale comprise entre 0,01% et 0,2%. Cette teneur est même de préférence inférieure ou égale à 0,05%, voire 0,04 ou 0,03% ou encore 0,025% ou 0,02%. Les teneurs préférées en oxyde de vanadium sont comprises entre 0,01 et 0,03%.

De fortes teneurs en oxyde de vanadium entraînent un assombrissement de la plaque et par conséquent une faible visibilité de l'affichage, en particulier dans le bleu. De plus faibles teneurs permettent au contraire d'éclaircir la plaque de cuisson.

Afin de bien cacher les éléments chauffants, la plaque selon l'invention peut en outre contenir, notamment en combinaison avec l'oxyde de vanadium, les agents colorants suivants dans les limites pondérales suivantes :

| | |
|---|---|
| $Fe_2O_3$ | 0 - 1 %, |
| NiO | 0 - 1 %, |
| CuO | 0 - 1 %, |
| CoO | 0 - 1 %, |
| MnO | 0 - 1 %, |

De préférence la teneur en oxyde de cobalt dans la composition de la plaque de vitrocéramique de l'ensemble d'affichage selon l'invention est inférieur ou égale à 0,12 %, voire 0.02 %.

La somme des pourcentages de ces agents colorants ($Fe_2O_3$, NiO, CuO, CoO, MnO) étant au moins égale à 0,025%, de préférence au moins égale à 0,045% et n'excédant pas 2%. De préférence, la plaque de cuisson de l'ensemble d'affichage selon l'invention ne contient toutefois pas d'oxyde de nickel, y compris lorsque la teneur en oxyde de vanadium est comprise entre 0,01% et 0,03%. L'oxyde de chrome ($Cr_2O_3$) est une impureté fréquemment répandue dans la plupart des matières premières, en particulier les porteurs de titane du type rutile. En outre, certains réfractaires constituant les fours de fusion peuvent contenir de l'oxyde de chrome ou être constitués d'oxyde de chrome. Pour obtenir les propriétés désirées, il est préférable que la teneur pondérale en oxyde de chrome ($Cr_2O_3$) dans la plaque de l'ensemble d'affichage selon l'invention soit inférieure ou égale 0.01%, de préférence 0.0075%, voire 0.006%. Une limitation à des teneurs aussi basses impose de sélectionner soigneusement les matières premières et d'éviter la présence de réfractaires en oxyde de chrome au contact du verre fondu.

De préférence, la teneur pondérale en oxyde de manganèse (MnO) dans la plaque de l'ensemble d'affichage selon l'invention est inférieure ou égale 0.1%, de préférence 0.045%, voire 0.025%.

La composition chimique de la plaque de l'ensemble d'affichage selon l'invention comprend de l'oxyde d'étain en une teneur pondérale comprise entre 0,1% et 0,5%, ou des sulfures métalliques. L'oxyde d'étain permet en effet de favoriser la réduction du vanadium pendant l'étape de céramisation, ce qui entraîne l'apparition de la couleur. Il aide en outre à affiner le verre-mère pendant la fusion de ce dernier, c'est-à-dire à favoriser l'élimination des inclusions gazeuses au sein de la masse de verre fondu. D'autres réducteurs que l'étain se sont révélés encore plus efficaces, notamment les sulfures métalliques, comme explicité plus en détail dans la suite du texte. La composition chimique de la plaque de cuisson de l'ensemble d'affichage selon l'invention peut donc contenir avantageusement de l'oxyde d'étain dans une teneur pondérale comprise entre 0.2% et 0.35%.

La composition chimique de la plaque de l'ensemble d'affichage selon l'invention contient au plus de faibles quantités d'antimoine et d'arsenic (c'est-à-dire des quantités n'excédant pas les 0.01% en pourcentage pondéral, voire 0.001%), pour des raisons environnementales et car ces oxydes se sont révélés difficilement compatibles avec un procédé de formage du type flottage, dans lequel du verre en fusion est déversé sur un bain d'étain fondu.

De préférence, la composition chimique de la plaque selon l'invention est exempte d'antimoine et d'arsenic.

La composition chimique de la plaque de l'ensemble d'affichage selon l'invention peut éventuellement comprendre des teneurs pondérales en oxyde de phosphore ($P_2O_5$) et/ou en oxyde de Rubidium ($Rb_2O$) inférieure ou égale à 0.1%, de préférence 0.09%, voire 0.07%.

La vitrocéramique de l'ensemble d'affichage selon l'invention comprend de préférence des cristaux de structure β-quartz au sein d'une phase vitreuse résiduelle. La valeur absolue de son coefficient de dilatation est typiquement inférieure ou égale à $15.10^{-7}/°C$, voire $5.10^{-7}/°C$.

De préférence, la source lumineuse polychromatique de l'ensemble d'affichage tel que décrit précédemment est une LED polychromatique, et/ou un afficheur à LED(s) polychromatique.

Une telle LED (et/ou un tel afficheur à LED(s)) prévue comme source lumineuse de l'ensemble d'affichage selon la présente invention est polychromatique et possède un spectre d'émission comprenant au moins deux pics à des longueurs d'onde différentes. Il en résulte, que la couleur perçue par l'observateur à travers la plaque est un mélange entre les différentes longueurs d'ondes transmises par la plaque.

Les inventeurs ont découvert de manière surprenante qu'un réglage du spectre d'émission de LEDs polychromatiques (ou un choix de la LED (et/ou de l'afficheur à LED(s)) commerciale qui permet directement le meilleur compromis), en combinaison avec le spectre de transmission fixe de la plaque de vitrocéramique utilisée dans l'ensemble d'affichage permet d'obtenir des affichages de couleur sensiblement dans toute la gamme du spectre du visible. Les LEDs, et/ou afficheurs à LEDS, sont particulièrement adaptées à ce type d'utilisation étant donné qu'ils donnent accès à une multitude de spectres d'émission en fonction du réglage choisi. Le choix de la source en fonction de l'éclairage voulu au travers de la plaque est d'avantage expliqué ci-après.

Avantageusement, la LED polychromatique (et/ou l'afficheur à LED(s)) émet selon une première émission comprise entre 400 et 500 nm et selon une deuxième émission au-delà de 500 nm. Les LEDs dénommées couramment sous l'appellation « LEDs hybrides » (cristal électroluminescent + phosphore(s) photoluminescent(s)) permettent d'obtenir de tels spectres d'émission. De telles LEDs, dont le spectre présente une émission secondaire très large sont facile à obtenir dans le commerce. Les LEDs blanches utilisée dans le cadre de l'invention sont par exemple fabriquées à partir d'une puce de cristal semi-conducteur tel que le nitrure de qallium/indium (InGaN) émettant dans le bleu recouverte d'une résine transparente (silicone, époxy) contenant des luminophores minéraux (par exemple YAG:Ce), absorbant le bleu et émettant dans le jaune. On peut également citer des LEDs ou afficheurs à LEDs suivants :

- La gamme XLamp® LED ou « High Brightness LED » de la Compagnie CREE (USA)

- La gamme NichiaHelios, NichiaRiqel, « Lamp type LED », NSSM, Références NSSW, NSEW, NS9 et NS2 de la compagnie Nichia (JP)

- La série des « TOPLED® » blanches de la société OSRAM (DE)

- La gamme « Luxeon® Rebel White » et « Luxeon® K2 » de la société Philips Lumileds (USA)

- Les LEDs de références E1S19, E1S27, E1S62, E1S66, E1S67, E1SAG, E1SAP, EASAA, EASAU, EASAV, E1L4x, E1L5x, de la société Toyoda Gosei (JP).

Les afficheurs à LED(s) sont des dispositifs d'affichage lumineux dont la source lumineuse « primaire » est constituée de LED(s), le plus souvent recouverte d'un élément diffusant. Ces dispositifs, destinés à afficher des mots/symboles alphanumériques sont généralement composés de « segments » lumineux (par exemple afficheurs à 7 segments), de points (afficheurs matriciels) ou de barres. On peut citer les afficheurs à LED(s) suivants :

- Afficheurs 7 segments blancs Réf. HDSM-431W et HDSM-433W de la société Avago Technologies (USA)

- Afficheurs matriciels « Dot Matrix® » de la société KingBright Ex. : Réf. TA20-11YWA

- Afficheurs à barres « Bar Graph Array® » de la société KingBright. Ex. : Réf. DC10YWA

On peut également utiliser des LEDs avec une émission de forte intensité dans le visible au-delà de 500 nm et avec un pic d'émission plus étroit, et de plus faible intensité, entre 400 et 500 nm.

De manière préférée, la source lumineuse polychromatique du dispositif lumineux de l'ensemble d'affichage décrit précédemment est une LED polychromatique (et/ou un afficheur à LED(s)) qui émet avec un premier pic d'émission compris entre 430 et 470 nm (bornes comprises), de préférence 450 nm, et un deuxième pic compris entre 540 et 560 nm (bornes comprises), de préférence 555 nm: une telle source, convenablement réglée, permet d'obtenir un affichage blanc au travers de la plaque de vitrocéramique de l'ensemble d'affichage décrit précédemment. Produire un tel affichage blanc au travers d'une plaque de vitrocéramique essentiellement brun foncé donne accès à des effets lumineux particulièrement recherchés en termes de design.

Avantageusement, la LED polychromatique (et/ou l'afficheur à LED(s)) émet avec un premier pic d'émission compris entre 430 et 470 nm, de préférence 450 nm, et un deuxième pic compris entre 540 et 560 nm (bornes comprises), de préférence 555 nm, le deuxième pic étant avantageusement de plus faible intensité que le premier. Les inventeurs ont montrés que compte tenu des plaques de vitrocéramiques utilisées, de telles LEDs (ou afficheur) permettaient le meilleur rendu de couleur des affichages blancs.

De préférence, la source lumineuse polychromatique du dispositif lumineux de l'ensemble d'affichage décrit précédemment est une LED (et/ou l'afficheur à LED(s)) polychromatique constituée de trois sources monochromatiques (les sources pouvant être dans la même LED ou il peut s'agir de trois LEDs monochromatiques indépendantes) dont les intensités sont prévues pour être réglées de manière indépendante : de telle LEDs (appelées souvent LEDs « RGB »), par exemple constituées de trois sources différentes ayant chacune le spectre d'émission d'une des trois couleurs primaires (Rouge, Vert et Bleu), donne accès à un spectre d'émission personnalisé en fonction de l'application recherchée en terme de coloration et d'intensité lumineuse au travers de la plaque de vitrocéramique.

La source lumineuse du dispositif lumineux de l'ensemble d'affichage selon la présente invention peut également comprendre, pris seuls ou en combinaison avec les sources lumineuses décrites précédemment, tout type d'afficheurs tels que les afficheurs à LEDs (afficheurs sept segments, afficheurs matriciels,...).

On adapte le flux émis de la LED, et/ou de l'afficheur à LEDs,(dans le visible) au niveau de luminance (lumineuse) souhaité à travers la plaque de vitrocéramique, étant donné le spectre de la LED (et/ou de l'afficheur) et la transmission spectrale (dans le visible) de la plaque. L'homme du métier du domaine des affichages lumineux à LED sait comment faire varier les paramètres de la source pour obtenir la luminance désirée.

Bien que non revendiqué, un procédé de réglage et/ou de sélection d'au moins une source de lumière du dispositif lumineux polychromatique de l'ensemble d'affichage tel que décrit précédemment est également divulgué ci-dessous. Pour un ensemble de N (N ≥ 2) plaques de vitrocéramiques, le procédé comprend les étapes suivantes :

1) Définir les coordonnées colorimétriques $(x_c, y_c)$ de la cible (selon le modèle CIE 1931) pour un affichage d'une nuance de couleur choisie en transmission à travers les N plaques de vitrocéramiques;

2) Choisir le spectre et calculer les coordonnées colorimétriques $(x_s^r, y_s^r)$ d'une source polychromatique de réglage qui, en transmission à travers les N plaques, donne un rendu moyen sensiblement proche du rendu ciblé $(x_c, y_c)$.

3) Minimiser la distance entre l'ensemble des coordonnées colorimétriques $(x_t^i, y_t^i)$ de la plaque de vitrocéramique et les coordonnées colorimétriques $(x_t, y_t)$ moyennes pour N plaques de vitrocéramiques en maintenant la distance entre les coordonnées colorimétriques moyennes $(x_t, y_t)$ pour N plaques de vitrocéramiques et les coordonnées colorimétriques $(x_c, y_c)$ de la cible inférieure à une valeur acceptable pour l'application visée.

Pour une plaque (N=1) de vitrocéramique, le procédé comprend les étapes suivantes :

1) Définir les coordonnées colorimétriques $(x_c, y_c)$ de la cible (selon le modèle CIE 1931) pour un affichage d'une nuance de couleur choisie en transmission à travers la plaque de vitrocéramique ;

2) Choisir le spectre et calculer les coordonnées colorimétriques $(x_s^r, y_s^r)$ d'une source polychromatique qui, en transmission à travers la plaque, donne un rendu moyen sensiblement proche du rendu ciblé $(x_c, y_c)$.

3) Minimiser la distance entre les coordonnées colorimétriques $(x_t, y_t)$ de la source au travers la plaque de vitrocéramique et les coordonnées colorimétriques $(x_c, y_c)$ de la cible.

Les inventeurs ont démontré que la solution la plus appropriée pour sélectionner une source de lumière afin d'obtenir un affichage d'une certaine couleur et avec la nuance recherchée, consiste tout d'abord à se placer dans le diagramme colorimétrique de la CIE 1931, donnant la couleur perçue en fonction des coordonnées colorimétriques $(x, y)$.

Le procédé décrit ci-dessus permet d'obtenir un affichage sensiblement identique pour un groupe de N plaques de vitrocéramiques différentes à partir d'une même source. Ce procédé est également utile pour déterminer quelle source lumineuse permet d'obtenir un rendu sensiblement identique pour chaque plaque d'un même type, malgré les différences de structure et de composition du matériau dues à la fabrication. Autrement dit, l'étape 3) sert à obtenir un même rendu de couleur pour N plaques différentes, ou pour tenir compte des tolérances de fabrication d'une même plaque.

La cible, c'est-à-dire l'affichage au travers de la plaque, en terme de rendu coloré, a pour coordonnées colorimétriques $(x_c, y_c)$. Ayant défini les coordonnées colorimétriques $(x_c, y_c)$ de l'affichage « cible », on cherche à déterminer les coordonnées colorimétriques $(x_s, y_s)$ de la source polychromatique permettant d'obtenir le rendu souhaité à travers la plaque.

On considère un ensemble de N plaques de vitrocéramiques dont les compositions chimiques et les transmissions optiques sont telles que décrites précédemment pour l'ensemble d'affichage selon l'invention.

On note $(x_t^i, y_t^i)$ les coordonnées colorimétriques du rendu obtenu en transmission à travers la plaque i (i allant de 1 à N), à partir de la source polychromatique de réglage qui émet sensiblement dans toute la gamme des longueurs d'ondes du visible et de coordonnées colorimétriques $(x_s^r, y_s^r)$. On définit ainsi une zone sur le diagramme CIE 1931 où se situent les N coordonnées colorimétriques $(x_t^i, y_t^i)$.

On note $(x_t, y_t)$ les coordonnées colorimétriques de la couleur moyenne transmise à travers les N plaques de vitrocéramiques et dont l'expression mathématique est rappelée ci-dessous :

$$\overline{x_t} \,\square\, \frac{1}{N}\sum_{i\square 1}^{N} x_t^i \qquad ; \qquad \overline{y_t} \,\square\, \frac{1}{N}\sum_{i\square 1}^{N} y_t^i \qquad (\text{i})$$

Pour avoir un rendu identique de couleur de l'affichage en transmission à travers les N plaques de vitrocéramique sélectionnés, par exemple un rendu identique blanc, on cherche à ce que la taille de la zone sur le diagramme CIE 1931 où se situent les N points de coordonnées colorimétriques $(x_t^i, y_t^i)$ (i allant de 1 à N) soit la plus petite possible. Ceci peut se faire en minimisant la quantité :

$$\frac{1}{N}\sum_{i\square 1}^{N} \sqrt{(x_t^i \,\square\, \overline{x_t})^2 \,\square\, (y_t^i \,\square\, \overline{y_t})^2} \qquad (\text{ii})$$

Pour avoir un rendu d'une couleur déterminée, par exemple blanc, on cherche à ce que la distance entre les coordonnées colorimétriques moyennes $(\overline{x_t}, \overline{y_t})$ pour les N plaques de vitrocéramiques et les coordonnées colorimétriques $(x_c, y_c)$ de la cible, dans le diagramme de chromaticité CIE 1931 soit inférieure à une valeur limite acceptable en fonction de l'application visée.

Cette distance peut être calculée / évaluée / estimée au moyen de la relation suivante :

$$\sqrt{(\overline{x_t} \,\square\, x_c)^2 \,\square\, (\overline{y_t} \,\square\, y_c)^2} \qquad (\text{iii})$$

On choisira pour la valeur limite 0,05, préférentiellement 0,01 et encore plus préférentiellement 0,005.

Utilisant les équations (ii) et (iii) pour réaliser l'étape 3) du procédé, on connaît alors les coordonnées colorimétriques $(x_s, y_s)$ des sources qu'il est possible d'utiliser pour obtenir l'effet lumineux recherché.

L'invention a aussi pour objet une table de cuisson comprenant un ensemble d'affichage tel que décrit précédemment, et au moins un élément chauffant, par exemple un foyer radiant ou halogène ou un élément d'induction.

L'invention sera mieux comprise à la lumière des exemples, ainsi que des dessins et des graphiques annexés, simplement donnés à titre illustratif et qui ne doivent nullement être interprété comme limitatifs, et pour lesquels :

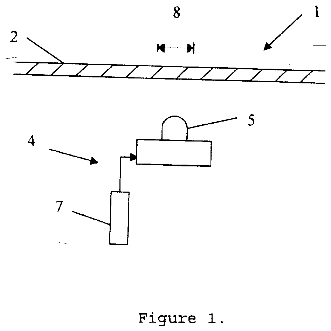

- La figure 1 représente, vu de profil et en coupe, un mode de réalisation d'un ensemble d'affichage selon la présente invention.

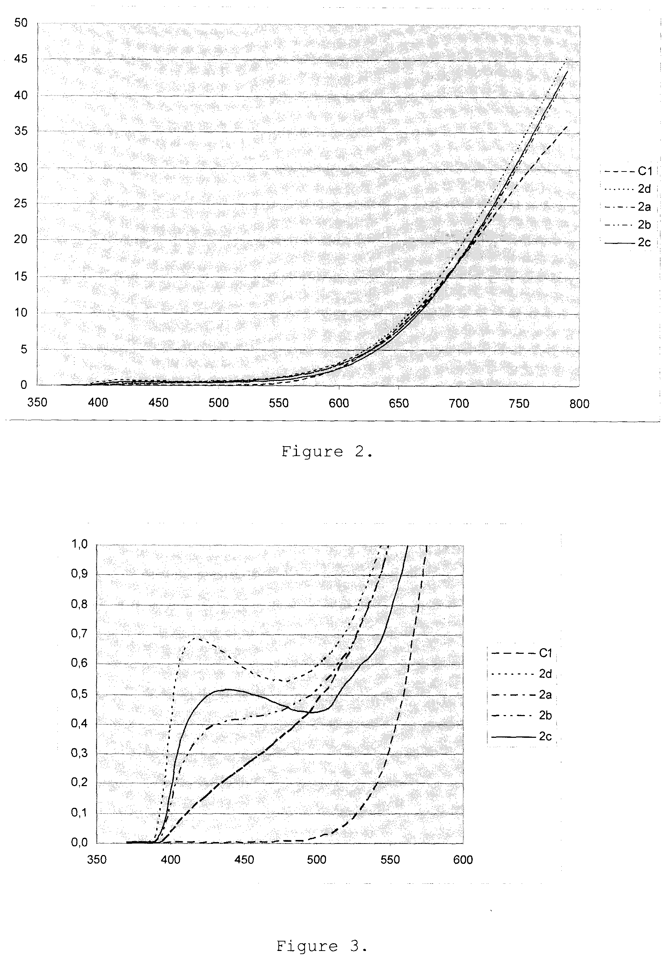

- Les figures 2 et 3 représentent le spectre de transmission optique de différentes plaques de vitrocéramique utilisées dans un ensemble d'affichage selon la présente invention (la figure 3 est un agrandissement du spectre représenté sur la figure 2). Le graphique montre en ordonnée, le pourcentage de lumière transmise par la plaque en fonction de la longueur d'onde en nanomètre du faisceau transmis, figurant sur l'axe des abscisses.

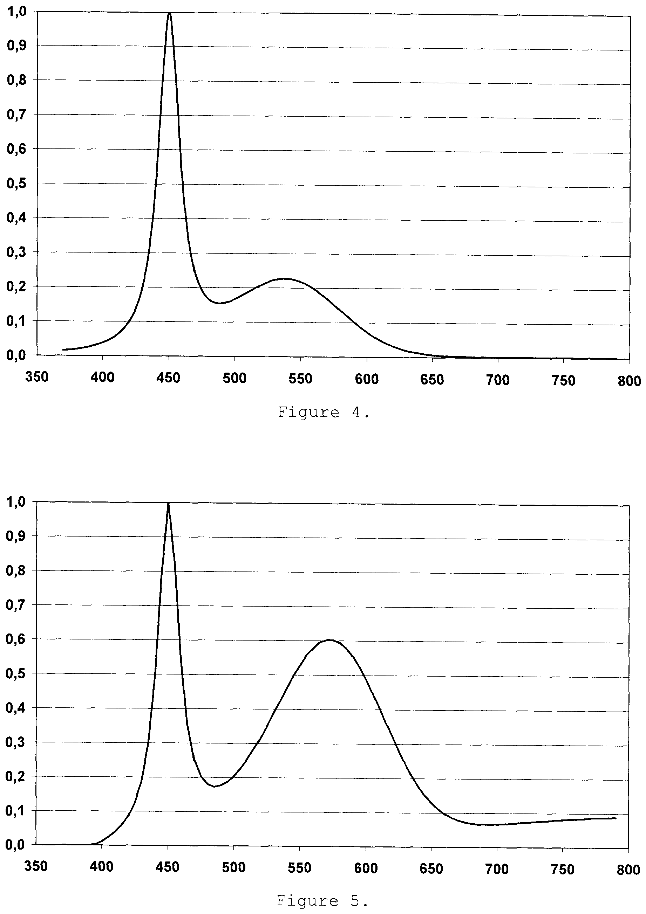

- Les figures 4, 6, 8, 10 et 12 représentent le spectre d'émission d'exemple de LEDs polychromatiques d'un ensemble d'affichage selon l'invention. Ces figures montrent en ordonnée, l'intensité relative de lumière émise par rapport au maximum pris égal à 1, en fonction de la longueur d'onde en nanomètre du faisceau incident, figurant sur l'axe des abscisses.

- Les figures 5, 7, 9, 11 et 13 représentent le spectre du rayonnement transmis par des LEDs polychromatique - dont les spectres d'émission sont respectivement illustrés sur les figures 4, 6, 8, 10 et 12 - au travers des plaques de vitrocéramique dont les spectres de transmission sont montrés aux figures 2 et 3. Ces figures 5, 7, 9, 11 et 13 montrent en ordonnée, l'intensité relative de lumière transmise par rapport au maximum pris égal à 1, en fonction de la longueur d'onde en nanomètre du faisceau transmis, figurant sur l'axe des abscisses.

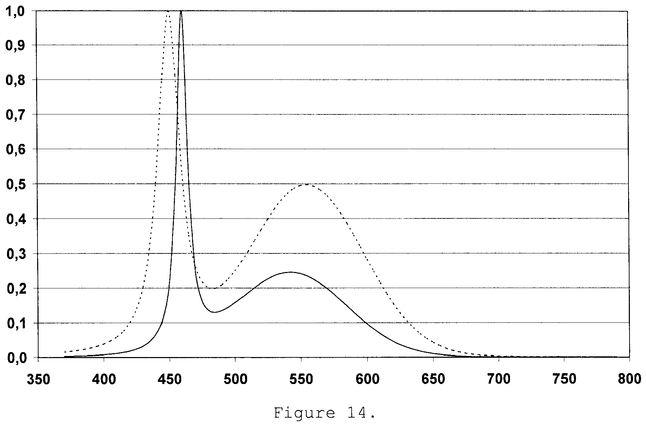

- La figure 14 représente le spectre du rayonnement émis par une LED polychromatique obtenu au travers de deux plaques de vitrocéramique de composition différente. La courbe matérialisée en traits pointillés correspond à l'émission de la LED sélectionné au départ pour faire les calculs. On obtient un affichage identique au travers des deux plaques avec le spectre correspondant à la courbe en traits pleins.

L'ensemble d'affichage 1 représenté à la figure 1 comprend une plaque de vitrocéramique 2 de composition chimique 3a, 3b, 3c ou 3d, et un dispositif lumineux 4 comprenant une source polychromatique 5 (constituée d'une LED 6a, 6b, 6c, 6d ou 6e) et un moyen de commande 7. En fonctionnement, la source polychromatique 5 émet un faisceau lumineux qui traverse la plaque 2 au niveau de la zone d'affichage 8. La distance entre la source 5 et la plaque 2 est inférieure ou égale à 5 mm, elle peut notamment être inférieure à 2 mm, voire 1 mm.

Le faisceau émis par la source 5 a une largeur comprise entre 0 et 5 mm. Dans le cas présent, la largeur du faisceau est supérieure à 0.5 mm.

Le tableau 1 donne les compositions chimiques C1, 3a, 3b, 3c et 3d de différentes plaques de vitrocéramiques 2, il indique les teneurs (pourcentages) pondérales en oxydes.

La composition C1 (exemple comparatif) est la composition chimique d'une vitrocéramique dont les très faibles transmissions entre 400 et 500 nm entraînent une visibilité presque nulle des LEDs qui émettent uniquement dans cette gamme du spectre (bleues à vert...).

Les compositions 3a à 3d sont des exemples de composition chimique de plaque de vitrocéramiques 2 de l'ensemble d'affichage 1 selon l'invention.

Tableau 1

| | C1 | 3a | 3b | 3c | 3d |
|---|---|---|---|---|---|
| $SiO_2$ | 68,7 | 65,5 | 65,5 | 65,5 | 64,7 |
| $Al_2O_3$ | 18,9 | 20,3 | 20,3 | 20,3 | 20, 45 |
| $Li_2O$ | 3,5 | 3,8 | 3,8 | 3,8 | 3,75 |
| $TiO_2$ | 2,6 | 2,9 | 2,9 | 2,9 | 3,02 |
| $ZrO_2$ | 1,7 | 1,3 | 1,3 | 1,3 | 1,35 |
| $ZnO$ | 1,6 | 1,5 | 1,5 | 1,5 | 1,52 |
| $MgO$ | 1,3 | 0,4 | 0,4 | 0,4 | 0,36 |
| $CaO$ | - | 0,5 | 0,4 | 0,4 | 0,44 |
| $BaO$ | 0.8 | 2,6 | 2,6 | 2,6 | 2,5 |
| $Na_2O$ | 0,1 | 0,6 | 0,6 | 0,6 | 0,62 |
| $K_2O$ | 0,1 | 0,2 | 0,2 | 0,2 | 0,25 |
| $MnO$ | - | 0, 02 | 0, 02 | 0, 02 | - |
| $SnO_2$ | - | 0,3 | 0,3 | 0,3 | 0,25 |
| $V_2O_5$ | 0,2 | 0,028 | 0,028 | 0,028 | 0,025 |
| $Fe_2O_3$ | 0,1 | 0,1 | 0,1 | 0,1 | 0,087 |
| $As_2O_3$ | 0,4 | - | - | - | <0,01 |
| $Sb_2O_3$ | - | - | - | - | <0,01 |
| $Cr_2O_3$ | - | 0,0054 | 0,0017 | 0,0012 | - |
| $CoO$ | - | - | - | 0,0147 | - |
| $P_2O_5$ | - | - | - | - | 0,07 |
| $Rb_2O$ | - | - | - | - | 0,09 |
| $B_2O_3$ et/ou F | - | - | - | - | <0,01 |
| Visibilité LED blanches | Nulle | Bonne | Bonne | Bonne | Bonne |

Le tableau 1 donne des compositions d'échantillons de plaques de vitrocéramiques 3a, 3b, 3c et 3d, de l'ensemble d'affichage 1 pour lequel des affichages blancs ont été obtenus. Les spectres de transmissions donnés aux figures 5, 7, 9, 11 et 13 montrent qu'un affichage blanc est obtenu grâce à l'emploi des LEDs appropriées (LEDs 6a à 6e) dont les caractéristiques spectrales en émission sont rappelés sur les figures 4, 6, 8, 10 et 12.

Protocole de mesure des spectres d'émission/transmission

Les différentes plaques de vitrocéramiques sont mesurés sur des échantillons de dimensions 50 mm x 50 mm dont la face texturée (présence de picots) a été supprimée par amincissage / polissage de l'échantillon. La mesure est effectuée au moyen d'un spectromètre, par exemple le modèle Lambda950 de la société Perkin Elmer.

Les spectres d'émission/transmission sont mesurés à l'aide d'une sphère intégrante (par exemple le modèle SPH-12-X de la société SphereOptics) couplée à un spectromètre (par exemple le modèle CAS140 de la société Instrument Systems).

Les figures 2 et 3 représentent le spectre de transmission des plaques dont les compositions C1, 3a, 3b, 3c et 3d sont données dans le tableau 1. Les échantillons de plaques 2 de composition 3a à 3d ont toutes une transmission optique entre 400 et 500 nm relativement élevée, comparé à l'échantillon de plaque 2 de composition C1 : en effet, la composition C1 est typiquement celle des plaques usuellement utilisées dans les tables de cuisson qui ne transmettent bien les longueurs d'ondes que dans le rouge.

Les figures 4, 6, 8, 10, 12 représentent le spectre d'émission d'exemple de LEDs polychromatiques 6a à 6e du dispositif lumineux 4 de l'ensemble d'affichage 1. Ces LEDs ont été sélectionnées afin d'obtenir un rendu blanc de l'affichage au travers de la plaque de vitrocéramique 2. Ces LEDs 6a à 6e présentent toutes notamment un premier pic d'émission avec un maximum entre 400 et 500 nm, et un pic deuxième pic d'émission avec un maximum entre 500 et 650 nm.

La figure 4 représente le spectre (normalisé) d'émission de la LED 6a dont les caractéristiques sont les suivantes :

- **Pic bleu** :

  Intensité = 1.0 (sans unité)
  Position = 450 nm
  Largeur = 20 nm

- **Pic « jaune »** :

  Intensité = 0.22 (sans unité)
  Position = 540 nm
  Largeur = 93 nm

Ce spectre possède des coordonnées colorimétriques (CIE 1931) $x_s = 0.211$ ; $y_s = 0.219$.

À travers l'échantillon de plaque de vitrocéramique de composition 3b, le spectre (normalisé) transmis à partir de la LED 6a est reporté sur la figure 5. Ce spectre a pour coordonnées colorimétriques $x_t = 0.335$ et $y_t = 0,339$, donnant un rendu « blanc » de l'afficheur LED à travers la plaque de vitrocéramique considérée.

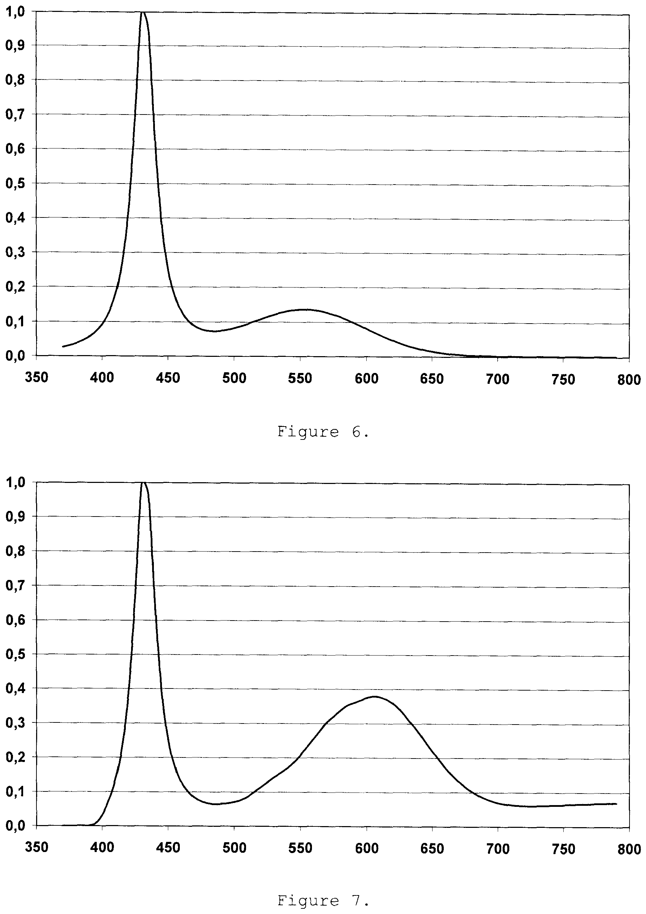

La figure 6 représente un spectre (normalisé) d'émission de la LED OSRAM Réf. LUW-G5AP « Ultra-White » (LED 6b). Ce spectre possède les caractéristiques suivantes :

- **Pic bleu** :

  Intensité = 1.0 (sans unité)
  Position = 432 nm
  Largeur = 20 nm

- **Pic « jaune »** :

  Intensité = 0.13 (sans unité)
  Position = 555 nm
  Largeur = 105 nm

Ce spectre possède des coordonnées colorimétriques (CIE 1931) $x_s = 0.230$ ; $y_s = 0.180$.

À travers l'échantillon de plaque de vitrocéramique de composition 3c, le spectre (normalisé) transmis à partir de la LED 4b est reporté sur la figure 7. Le spectre transmis a pour coordonnées colorimétriques $x_t = 0.356$ et $y_t = 0,263$, donnant un rendu « blanc-rose » de la LED à travers la plaque de vitrocéramique considérée.

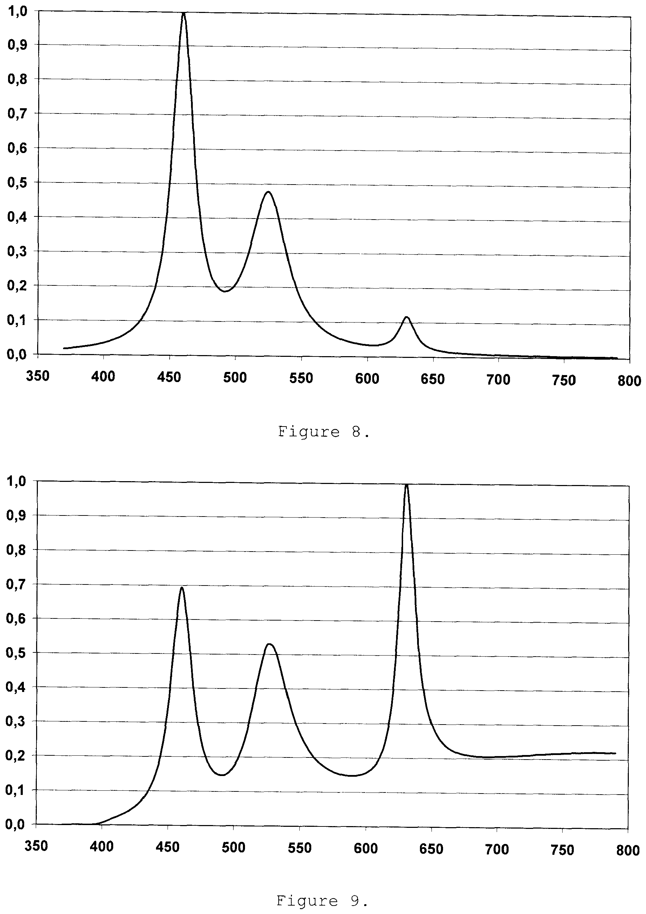

La figure 8 représente le spectre (normalisé) d'émission d'une LED RGB 6c dont les caractéristiques sont les suivantes :

- **Pic bleu** :

  Intensité = 1.0 (sans unité)
  Position = 460 nm
  Largeur = 20 nm

- **Pic vert** :

  Intensité = 0.47 (sans unité)
  Position = 525 nm
  Largeur = 35 nm

- **Pic rouge** :

  Intensité = 0.11 (sans unité)
  Position = 630 nm
  Largeur = 15 nm

Ce spectre possède des coordonnées colorimétriques (CIE 1931) $x_s$ = 0.184 ; $y_s$ = 0.250.

À travers l'échantillon de plaque de vitrocéramique de composition 3b, le spectre (normalisé) transmis à partir de la LED 6c est reporté sur la figure 9. Le spectre transmis a pour coordonnées colorimétriques $x_t$ = 0.335 et $y_t$ = 0,338, donnant un rendu « blanc » de la LED à travers la plaque de vitrocéramique considérée.

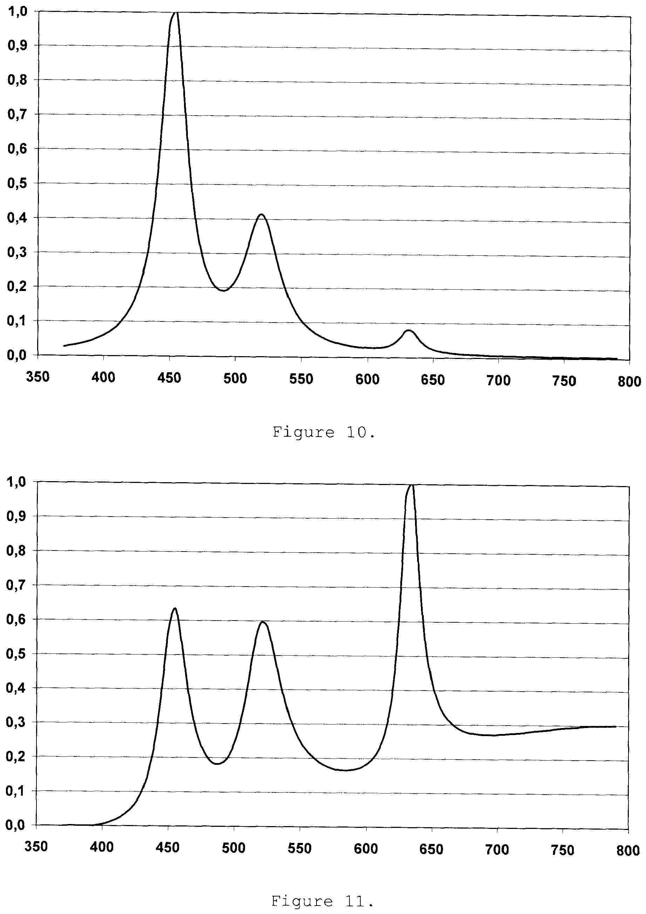

La figure 10 représente un spectre (normalisé) d'émission de la LED RGB OSRAM Réf. LRTD-C9TP (LED 6d). Ce spectre possède les caractéristiques suivantes :

- **Pic bleu** :

  Intensité = 1.0 (sans unité)
  Position = 453 nm
  Largeur = 25 nm

- **Pic vert** :

  Intensité = 0.38 (sans unité)
  Position = 520 nm
  Largeur = 33 nm

- **Pic rouge** :

  Intensité = 0.07 (sans unité)
  Position = 632 nm
  Largeur = 18 nm

Ce spectre peut être obtenu avec cette LED en contrôlant indépendamment le courant alimentant chacune des puces (R, G, ou B). Ce faisant, le spectre de la LED possède des coordonnées colorimétriques (CIE 1931) $x_s$ = 0.173 ; $Y_s$ = 0.185.

À travers l'échantillon de plaque de vitrocéramique de composition 3a, le spectre (normalisé) transmis à partir de la LED 6d est reporté sur la figure 11. Le spectre transmis a pour coordonnées colorimétriques $x_t$ = 0.337 et $y_t$ = 0,332, donnant un rendu « blanc » de la LED à travers la plaque de vitrocéramique considérée.

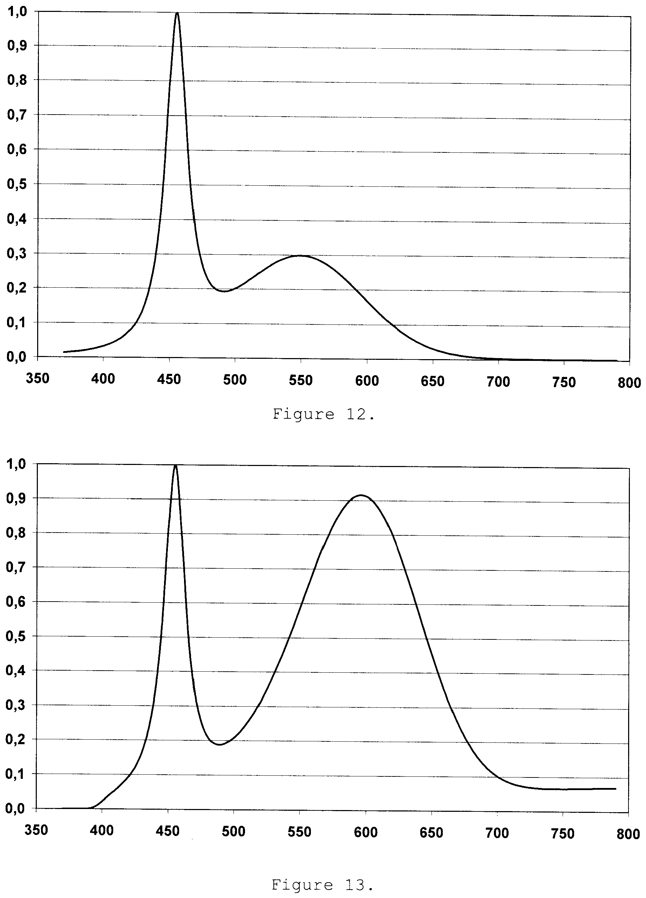

La figure 12 représente un spectre (normalisé) d'émission de l'afficheur LED à 7 segments de la société Avago Technologies (Référence HDSM-431W) (LEDs 6e). Ce spectre possède les caractéristiques suivantes :

- **Pic bleu** :

  Intensité = 1.0 (sans unité)
  Position = 455 nm
  Largeur = 20 nm

- **Pic « jaune »** :

  Intensité = 0.3 (sans unité)
  Position = 551 nm
  Largeur = 108 nm

Ce spectre possède des coordonnées colorimétriques (CIE 1931) $x_s$ = 0.250 ; $y_s$ = 0.270.

À travers l'échantillon de plaque de vitrocéramique de composition 3d, le spectre (normalisé) transmis à partir du système de LED 6e est reporté sur la figure 13. Le spectre transmis a pour coordonnées colorimétriques $x_t$ = 0.401 et $y_t$ = 0,353, donnant un rendu « blanc-orangé » des LEDs à travers la plaque de vitrocéramique considérée.

La figure 14 représente un résultat obtenu en appliquant le procédé de réglage et/ou de sélection d'une source de lumière. Les échantillons de plaques à partir desquels les calculs ont été faits sont les 2 plaques de vitrocéramique de composition 3b et 3d. La courbe en trait pointillé représente le spectre (normalisé) initial d'émission de la LED utilisée au début du procédé de sélection d'une source de lumière. La courbe en trait plein représente le spectre (normalisé) final d'émission de la LED obtenue à la fin du procédé. On prend comme valeur limite acceptable, telle que définie dans l'étape 3 du procédé, la valeur 0.01.

Les caractéristiques de ces spectres sont les suivantes :

**SPECTRE INITIAL** :

- **Pic bleu** :

  Intensité = 1.0 (sans unité)
  Position = 450 nm
  Largeur = 20 nm

- **Pic « jaune »** :

  Intensité = 0.50 (sans unité)
  Position = 555 nm
  Largeur = 100 nm

**SPECTRE FINAL** :

- **Pic bleu** :

  Intensité = 1.0 (sans unité)
  Position = 4660 nm
  Largeur = 10 nm

- **Pic « jaune »** :

  Intensité = 0.25 (sans unité)
  Position = 542.9 nm
  Largeur = 98.5 nm

On vérifie donc les prévisions apportées en amont par les calculs, conformément au procédé de sélection de source de lumière du dispositif lumineux polychromatique de l'ensemble d'affichage selon l'invention.

**Revendications**

1. Ensemble d'affichage (1) comprenant, d'une part, une plaque en vitrocéramique (2) du type aluminosilicate de lithium et dont la transmission optique pour une épaisseur de 4 mm est comprise entre 0,2% et 4% pour au moins une longueur d'onde comprise entre 400 et 500 nm et, d'autre part, un dispositif lumineux (4), **caractérisé en ce que** le dispositif lumineux (4) comprend au moins une source lumineuse polychromatique (5) présentant au moins une première émission d'intensité non nulle à ladite longueur d'onde comprise entre 400 et 500 nm et au moins une deuxième émission à une longueur d'onde de plus de 500 nm, et tel que le positionnement de ladite source (5) est adapté pour permettre un affichage au travers de ladite plaque de vitrocéramique (2), et **en ce que** la composition chimique de la plaque de vitrocéramique (2) comprend les constituants suivants dans les limites définies ci-après exprimées en pourcentages pondéraux :

| | |
|---|---|
| $SiO_2$ | 64 - 70 % |
| $Al_2O_3$ | 18 - 25 % |
| $Li_2O$ | 2,5 - 3,8 % |
| $K_2O$ | 0 - <1,0 % |
| $Na_2O$ | 0 - <1,0 % |
| ZnO | 1,2 - 2,8 % |
| MgO | 0,30 - 1,5 % |
| CaO | 0 - 1% |
| BaO | 0 - 3 % |
| SrO | 0 - 1,4 % |
| $TiO_2$ | 1,8 - 3,2 % |
| $ZrO_2$ | 1,0 - 2,5 % |

et comprend de l'oxyde d'étain en une teneur pondérale comprise entre 0,1% et 0,5%, de préférence comprise entre 0.2% et 0.35%, ou des sulfures métalliques.

2. Ensemble d'affichage selon la revendication 1, **caractérisé en ce que** la transmission optique de la plaque de vitrocéramique (2) pour une épaisseur de 4 mm est comprise entre 0,4% et 1,5% pour au moins une longueur d'onde comprise entre 400 et 500 nm.

3. Ensemble d'affichage selon l'une des revendications précédentes, **caractérisé en ce que** la composition chimique de la plaque de vitrocéramique contient des quantités n'excédant pas les 0.01% en pourcentage pondéral, de préférence pas les 0.001%, et avantageusement elle est exempte d'antimoine et d'arsenic.

4. Ensemble d'affichage selon l'une des revendications précédentes, **caractérisé en ce que** la composition chimique de la plaque de vitrocéramique (2) comprend de l'oxyde de vanadium en une teneur pondérale comprise entre 0,01% et 0,2%.

5. Ensemble d'affichage selon l'une des revendications précédentes, **caractérisé en ce que** la composition chimique de la plaque de vitrocéramique (2) comprend de l'oxyde de vanadium en une teneur pondérale comprise entre 0,01% et 0,03%.

6. Ensemble d'affichage selon l'une des revendications précédentes, **caractérisé en ce que** la composition chimique de la plaque de vitrocéramique (2) comprend de l'oxyde de cobalt en une teneur pondérale inférieur ou égale à 0.12 %.

7. Ensemble d'affichage selon l'une des revendications précédentes, **caractérisé en ce que** la composition chimique de la plaque de vitrocéramique 2 comprend de l'oxyde d'étain en une teneur pondérale comprise entre 0,1% et 0,5%.

8. Ensemble d'affichage selon l'une des revendications précédentes, **caractérisé en ce que** la composition chimique de la plaque de vitrocéramique 2 comprend de l'oxyde d'étain dans une teneur pondérale comprise entre 0.2% et 0.35 %.

9. Ensemble d'affichage selon l'une des revendications précédentes, **caractérisé en ce que** la composition chimique de la plaque de vitrocéramique (2) ne contient pas d'oxyde de nickel.

10. Ensemble d'affichage selon l'une des revendications précédentes, **caractérisé en ce que** la composition chimique de la plaque de vitrocéramique (2) est telle que la teneur pondérale en oxyde de chrome est inférieure ou égale à 0.01%, de préférence 0.0075%, voire 0.006%.

**11.** Ensemble d'affichage selon l'une des revendications précédentes, **caractérisé en ce que** la composition chimique de la plaque de vitrocéramique (2) est telle que la teneur pondérale en oxyde de manganèse est inférieure ou égale 0.1%, de préférence 0.045%, voire 0.025%.

**12.** Ensemble d'affichage selon l'une des revendications précédentes, **caractérisé en ce que** la source lumineuse polychromatique 5 est une LED polychromatique 6a, 6b, 6c, 6d et 6e.

**13.** Ensemble d'affichage selon l'une des revendications précédentes, **caractérisé en ce que** la source lumineuse polychromatique 5 est une LED polychromatique 6a, 6b, 6c, 6d et 6e qui émet avec un premier pic d'émission compris entre 430 et 470 nm, de préférence 450 nm, et un deuxième pic compris entre 540 et 560 nm, de préférence 555 nm.

**14.** Ensemble d'affichage selon la revendication 12, **caractérisé en ce que** ledit deuxième pic est de plus faible intensité que le premier.

**15.** Ensemble d'affichage selon l'une des revendications précédentes, **caractérisé en ce que** la source lumineuse polychromatique 5 est une LED polychromatique 6a, 6b, 6c, 6d et 6e constituée de trois sources monochromatiques dont les intensités sont prévues pour être réglées de manière indépendante.

**16.** Table de cuisson comprenant un ensemble d'affichage (1) selon l'une des revendications 1 à 15, et au moins un élément chauffant, par exemple un foyer radiant ou halogène ou un élément d'induction.


**Patentansprüche**

**1.** Anzeigeanordnung (1), welche einerseits eine Platte aus Lithiumaluminosilikat-Glaskeramik (2) aufweist, deren optische Transmission für eine Dicke von 4 mm zwischen 0,2 % und 4 % für mindestens eine Wellenlänge zwischen 400 und 500 nm beträgt, und andererseits eine Leuchtvorrichtung (4), **dadurch gekennzeichnet, dass** die Leuchtvorrichtung (4) mindestens eine polychromatische Lichtquelle (5) aufweist, die mindestens eine erste Emission mit einer von null verschiedenen Intensität bei der Wellenlänge zwischen 400 und 500 nm und mindestens eine zweite Emission bei einer Wellenlänge von mehr als 500 nm aufweist, und so beschaffen ist, dass die Positionierung der Lichtquelle (5) geeignet ist, eine Anzeige durch die Glaskeramikplatte (2) hindurch zu ermöglichen, und dass die chemische Zusammensetzung der Glaskeramikplatte (2) die folgenden Bestandteile in den nachfolgend definierten Grenzen aufweist, ausgedrückt in Gewichtsprozent:

| | |
|---|---|
| $SiO_2$ | 64 - 70 % |
| $Al_2O_3$ | 18 - 25 % |
| $Li_2O$ | 2,5 - 3,8 % |
| $K_2O$ | 0 - <1,0 % |
| $Na_2O$ | 0 - <1,0 % |
| ZnO | 1,2 - 2,8 % |
| MgO | 0,30 - 1,5 % |
| CaO | 0 - 1 % |
| BaO | 0 - 3 % |
| SrO | 0 - 1,4 % |
| $TiO_2$ | 1,8 - 3,2 % |
| $ZrO_2$ | 1,0 - 2,5 % |

und Zinnoxid mit einem Gewichtsanteil zwischen 0,1% und 0,5%, vorzugsweise zwischen 0,2% und 0,35%, oder Metallsulfide aufweist.

**2.** Anzeigeanordnung nach Anspruch 1, **dadurch gekennzeichnet, dass** die optische Transmission der Glaskeramikplatte (2) für eine Dicke von 4 mm zwischen 0,4 % und 1,5 % für mindestens eine Wellenlänge zwischen 400 und 500 nm beträgt.

**3.** Anzeigeanordnung nach einem der vorhergehenden Ansprüche, **dadurch gekennzeichnet, dass** die chemische Zusammensetzung der Glaskeramikplatte Mengen an Antimon und Arsen enthält, deren Gewichtsanteil 0,01 % und vorzugsweise 0,001 % nicht übersteigt, und vorteilhafterweise kein Antimon und Arsen enthält.

4. Anzeigeanordnung nach einem der vorhergehenden Ansprüche, **dadurch gekennzeichnet, dass** die chemische Zusammensetzung der Glaskeramikplatte (2) Vanadiumoxid mit einem Gewichtsanteil zwischen 0,01 % und 0,2 % aufweist.

5. Anzeigeanordnung nach einem der vorhergehenden Ansprüche, **dadurch gekennzeichnet, dass** die chemische Zusammensetzung der Glaskeramikplatte (2) Vanadiumoxid mit einem Gewichtsanteil zwischen 0,01 % und 0,03 % aufweist.

6. Anzeigeanordnung nach einem der vorhergehenden Ansprüche, **dadurch gekennzeichnet, dass** die chemische Zusammensetzung der Glaskeramikplatte (2) Cobaltoxid mit einem Gewichtsanteil aufweist, der kleiner oder gleich 0,12 % ist.

7. Anzeigeanordnung nach einem der vorhergehenden Ansprüche, **dadurch gekennzeichnet, dass** die chemische Zusammensetzung der Glaskeramikplatte 2 Zinnoxid mit einem Gewichtsanteil zwischen 0,1 % und 0,5 % aufweist.

8. Anzeigeanordnung nach einem der vorhergehenden Ansprüche, **dadurch gekennzeichnet, dass** die chemische Zusammensetzung der Glaskeramikplatte 2 Zinnoxid mit einem Gewichtsanteil zwischen 0,2 % und 0,35 % aufweist.

9. Anzeigeanordnung nach einem der vorhergehenden Ansprüche, **dadurch gekennzeichnet, dass** die chemische Zusammensetzung der Glaskeramikplatte (2) kein Nickeloxid enthält.

10. Anzeigeanordnung nach einem der vorhergehenden Ansprüche, **dadurch gekennzeichnet, dass** die chemische Zusammensetzung der Glaskeramikplatte (2) so beschaffen ist, dass der Gewichtsanteil an Chromoxid kleiner oder gleich 0,01 %, vorzugsweise 0,0075 % oder sogar 0,006 % ist.

11. Anzeigeanordnung nach einem der vorhergehenden Ansprüche, **dadurch gekennzeichnet, dass** die chemische Zusammensetzung der Glaskeramikplatte (2) so beschaffen ist, dass der Gewichtsanteil an Manganoxid kleiner oder gleich 0,1 %, vorzugsweise 0,045 % oder sogar 0,025 % ist.

12. Anzeigeanordnung nach einem der vorhergehenden Ansprüche, **dadurch gekennzeichnet, dass** die polychromatische Lichtquelle 5 eine polychromatische LED 6a, 6b, 6c, 6d und 6e ist.

13. Anzeigeanordnung nach einem der vorhergehenden Ansprüche, **dadurch gekennzeichnet, dass** die polychromatische Lichtquelle 5 eine polychromatische LED 6a, 6b, 6c, 6d und 6e ist, welche mit einem ersten Emissionspeak zwischen 430 und 470 nm, vorzugsweise bei 450 nm, und einem zweiten Peak zwischen 540 und 560 nm, vorzugsweise bei 555 nm, emittiert.

14. Anzeigeanordnung nach Anspruch 12, **dadurch gekennzeichnet, dass** der zweite Peak von geringerer Intensität als der erste ist.

15. Anzeigeanordnung nach einem der vorhergehenden Ansprüche, **dadurch gekennzeichnet, dass** die polychromatische Lichtquelle 5 eine polychromatische LED 6a, 6b, 6c, 6d und 6e ist, welche aus drei monochromatischen Lichtquellen besteht, deren Intensitäten dafür vorgesehen sind, auf eine unabhängige Weise geregelt zu werden.

16. Kochmulde, welche eine Anzeigeanordnung (1) nach einem der Ansprüche 1 bis 15 und mindestens ein Heizelement, zum Beispiel ein Strahlungs- oder Halogenheizelement oder ein Induktionselement, aufweist.

**Claims**

1. Display assembly (1) comprising, on the one hand, a glass-ceramic plate (2) of the lithium aluminosilicate type, the optical transmission of which for a thickness of 4 mm is between 0.2% and 4% for at least one wavelength between 400 and 500 nm and, on the other hand, a luminous device (4), **characterized in that** the luminous device (4) comprises at least one polychromatic light source (5) having at least a first emission of nonzero intensity at said wavelength between 400 and 500 nm and at least a second emission at a wavelength of more than 500 nm, and such that the positioning of said source (5) is designed to allow display through said glass-ceramic plate (2), and **in that** the chemical composition of the glass-ceramic plate (2) comprises the following constituents in the limits defined below, expressed in percentages by weight:

| | |
|---|---|
| $SiO_2$ | 64 - 70% |
| $Al_2O_3$ | 18 - 25% |
| $Li_2O$ | 2.5 - 3.8% |
| $K_2O$ | 0 - < 1.0 |
| $Na_2O$ | 0 - < 1.0% |
| ZnO | 1.2 - 2.8% |
| MgO | 0.30 - 1.5% |
| CaO | 0 - 1% |
| BaO | 0 - 3% |
| SrO | 0 - 1.4% |
| $TiO_2$ | 1.8 - 3.2% |
| $ZrO_2$ | 1.0 - 2.5%, |

and comprises tin oxide in an amount by weight of between 0.1% and 0.5%, preferably between 0.2% and 0.35%, or metal sulfides.

2. Display assembly according to Claim 1, **characterized in that** the optical transmission of the glass-ceramic plate (2), for a thickness of 4 mm, is between 0.4% and 1.5% for at least a wavelength between 400 and 500 nm.

3. Display assembly according to either of the preceding claims, **characterized in that** the chemical composition of the glass-ceramic plate contains amounts of antimony and arsenic not exceeding 0.01%, preferably not exceeding 0.001% by weight, and advantageously contains no antimony and arsenic.

4. Display assembly according to one of the preceding claims, **characterized in that** the chemical composition of the glass-ceramic plate (2) comprises vanadium oxide having a weight content of between 0.01% and 0.2%.

5. Display assembly according to one of the preceding claims, **characterized in that** the chemical composition of the glass-ceramic plate (2) comprises vanadium oxide having a weight content of between 0.01% and 0.03%.

6. Display assembly according to one of the preceding claims, **characterized in that** the chemical composition of the glass-ceramic plate (2) comprises cobalt oxide in an amount by weight of 0.12% or less.

7. Display assembly according to one of the preceding claims, **characterized in that** the chemical composition of the glass-ceramic plate 2 comprises tin oxide in an amount by weight of between 0.1% and 0.5%.

8. Display assembly according to one of the preceding claims, **characterized in that** the chemical composition of the glass-ceramic plate 2 comprises tin oxide in an amount by weight of between 0.2% and 0.35%.

9. Display assembly according to one of the preceding claims, **characterized in that** the chemical composition of the glass-ceramic plate (2) contains no nickel oxide.

10. Display assembly according to one of the preceding claims, **characterized in that** the chemical composition of the glass-ceramic plate (2) is such that the chromium oxide weight content is less than or equal to 0.01%, preferably 0.0075% or even 0.006%.

11. Display assembly according to one of the preceding claims, **characterized in that** the chemical composition of the glass-ceramic plate (2) is such that the manganese oxide weight content is less than or equal to 0.1%, preferably 0.045% or even 0.025%.

12. Display assembly according to one of the preceding claims, **characterized in that** the polychromatic light source 5 is a polychromatic LED 6a, 6b, 6c, 6d and 6e.

**13.** Display assembly according to one of the preceding claims, **characterized in that** the polychromatic light source 5 is a polychromatic LED 6a, 6b, 6c, 6d and 6e which emits with a first emission peak between 430 and 470 nm, preferably 450 nm, and a second peak between 540 and 560 nm, preferably 555 nm.

**14.** Display assembly according to Claim 12, **characterized in that** said second peak is of lower intensity than the first.

**15.** Display assembly according to one of the preceding claims, **characterized in that** the polychromatic light source 5 is a polychromatic LED 6a, 6b, 6c, 6d and 6e consisting of three monochromatic sources, the intensities of which are designed to be regulated independently.

**16.** Hob comprising a display assembly (1) according to one of Claims 1 to 15, and at least one heating element, for example a radiant or halogen heating element or an induction heating element.

Figure 1.

Figure 2.

Figure 3.

Figure 4.

Figure 5.

Figure 6.

Figure 7.

Figure 8.

Figure 9.

Figure 10.

Figure 11.

Figure 12.

Figure 13.

Figure 14.

**EP 2 526 070 B1**

## RÉFÉRENCES CITÉES DANS LA DESCRIPTION

**Documents brevets cités dans la description**

- EP 1465460 A2

- US 6846760 B2